# EUROPEAN PATENT APPLICATION

(11) **EP 4 831 585 A1**
(43) Date of publication of application: **28.10.2026**
(21) Application number: 25182887.7
(22) Date of filing: 16.06.2025
(51) Int. Cl.: G01C 9/28, G01C 9/34, G01B 3/04

(54) **SPIRIT LEVEL WITH ADJUSTABLE MEASURING ANGLE**

(30) Priority: 23.04.2025 CN 202510516381
(71) Applicant: Zhejiang Rongsheng Industrial Co., Ltd, Jinhua Zhejiang 321035 (CN)
(72) Inventor: ZHUANG, Zhiwei, Jinhua, 321035 (CN); ZHUANG, Shijie, Jinhua, 321035 (CN)
(74) Representative: Metida

(57) **Abstract**

A spirit level with an adjustable measuring angle includes an adjustable levelling assembly, where the adjustable levelling assembly includes a rotating carrier, an adjusting handwheel, a linkage assembly and a reading structure, the linkage assembly is disposed between the rotating carrier and the adjusting handwheel, and the reading structure is disposed on a mounting shell seat and the rotating carrier. A user can rotate the rotating carrier by rotating the adjusting handwheel, so as to adjust an angle of an adjustable level bubble to improve adaptability.

## Description

### TECHNICAL FIELD

The present invention relates to the field of spirit levels, and in particular, to a spirit level with an adjustable measuring angle.

### BACKGROUND

A spirit level is a measuring device that uses a liquid surface level principle to directly display an angular displacement with a level bubble and measure a deviation degree of a measured surface with respect to a horizontal position, a vertical position and an inclined position.

The existing spirit level usually includes a long strip shaped body and a plurality of level bubbles fixedly disposed on the body, and the level bubbles are usually parallel to a length direction of the body or perpendicular to the length direction of the body. In addition, the level bubbles can also be set at a common angle such as inclination of 45°.

A disadvantage of the existing spirit level is that since the level bubbles are fixed with respect to the body, only a special angle can be measured horizontally, and the adaptable range is relatively small.

### SUMMARY

For the disadvantage of the prior art, a purpose of the present invention is to provide a spirit level with an adjustable measuring angle in which a user can rotate the rotating carrier by rotating the adjusting handwheel, so as to adjust an angle of an adjustable level bubble and improve adaptability.

In order to achieve the above-mentioned purpose, the present invention provides the following technical solution.

A spirit level with an adjustable measuring angle includes: a body; an adjustable levelling assembly disposed on the body, the adjustable levelling assembly including: a mounting shell seat fixedly disposed in the body; a rotating carrier rotatably disposed in the mounting shell seat, and a rotating axial direction of the rotating carrier and a length direction of the body being perpendicularly disposed; an adjusting handwheel rotatably disposed in the mounting shell seat, and a rotating axial direction of the adjusting handwheel and the rotating axial direction of the rotating carrier being perpendicular disposed; an adjustable level bubble disposed on the rotating carrier to rotate along with the rotating carrier; a linkage assembly disposed between the rotating carrier and the adjusting handwheel to rotate the adjusting handwheel to drive the rotating carrier to rotate; and a reading structure including a main scale and a vernier scale, the main scale and the vernier scale being respectively disposed on the mounting shell seat and the rotating carrier to measure an included angle between a length direction of the adjustable level bubble and the length direction of the body.

By adopting the above-mentioned technical solution, the following beneficial effects can be achieved:
1. The user can rotate the adjusting handwheel to realize the linkage rotation of the rotating carrier under the action of the linkage assembly, thereby adjusting the angle of the adjustable level bubble, and after the adjustment is completed, the included angle between the length direction of the adjustable level bubble and the length direction of the body can be determined through the reading structure, so that the adjustable level bubble can be adjusted to any angle for use, thereby greatly improving the adaptability.
2. Common use methods include the following two methods. The first method is to adjust the adjustable level bubble to a specific angle k1 in advance, and under the condition of ensuring that the adjustable level bubble does not move, adjust the length direction of the body to the desired measurement position, and determine whether an included angle between the measurement position and the horizontal plane is k1 by observing whether the bubbles in the level bubble are centered. The second method is to adjust the body to the desired measurement position first, and then rotate the adjusting handwheel so that the bubbles in the adjustable level bubble are centered, and at this time, the indication k2 on the reading structure is the included angle between the measurement position and the horizontal plane.
3. The adjusting handwheel is provided so that the adjustable level bubble and the reading structure would not be blocked by the user's hand when the user drives the adjusting handwheel to rotate, that is, there is no need to raise the hand to observe the current reading and the state of the adjustable level bubble, thereby making the adjustment process more convenient.

### BRIEF DESCRIPTION OF THE DRAWINGS

FIG. 1 is an assembly diagram of a specific implementation of the present invention;
FIG. 2 is an assembly diagram of a specific implementation of the present invention;
FIG. 3 is an exploded view of a specific implementation of the present invention;
FIG. 4 is a section view of a specific implementation of the present invention;
FIG. 5 is an assembly diagram of an adjustable levelling assembly in a specific implementation of the present invention;
FIG. 6 is an exploded view of the adjustable levelling assembly in the specific implementation of the present invention;
FIG. 7 is a section view of the adjustable levelling assembly in the specific implementation of the present invention;
FIG. 8 is a partially enlarged view of FIG. 1;
FIG. 9 is a partially enlarged view of FIG. 3;
FIG. 10 is an assembly view of an end cover and a scriber in a specific implementation of the present invention;
FIG. 11 is a partially enlarged view of FIG. 4;
FIG. 12 is a partial structural schematic diagram of a second opening and closing cover in an open state in a specific implementation of the present invention;
FIG. 13 is a partial structural schematic diagram of the second opening and closing cover in a closed state in the specific implementation of the present invention;
FIG. 14 is schematic diagram of the second opening and closing cover in an exploded state in the specific implementation of the present invention.

### Description of reference numerals:

1. body;
11. first plate body; 12. second plate body; 13. third plate body; 14. fourth plate body; 15. mass reduction cavity; 16. length scale; 17. lifting and holding through hole; 18. first storage groove;
111. first clamping slot; 112. second clamping slot; 113. locking slot; 171. grasping handle; 181. first opening and closing cover;
2. adjustable levelling assembly;
21. mounting shell seat; 22. rotating carrier; 23. adjusting handwheel; 24. adjustable level bubble; 25. linkage assembly; 26. reading structure;
211. first half shell; 212. second half shell; 213. assembly cavity; 214. transparent viewable window; 215. outward-extending opening; 251. first bevel teeth; 252. second bevel teeth; 261. main scale; 262. vernier scale;
3. first level bubble;
4. second level bubble;
5. scriber;
51. reading portion; 52. positioning portion; 53. sliding portion; 54. extension portion;
511. reading hole; 512. reading pointer; 521. positioning hole; 522. V-shaped notch; 531. first clamping portion; 532. second clamping portion; 533. handle portion; 534. second mounting portion;
6. end cover;
61. insertion portion; 62. first mounting portion; 63. unlocking member; 64. reset member;
621. assembly member; 622. snap protrusion; 623. stiffener plate; 631. pressing portion;
71. pencil sharpener; 72. collection cavity; 73. second storage groove; 74. second opening and closing cover; 75. hinge clamping slot;
731. elastic clip; 741. reversing portion; 742. hinge rod.

### DESCRIPTION OF THE EMBODIMENTS

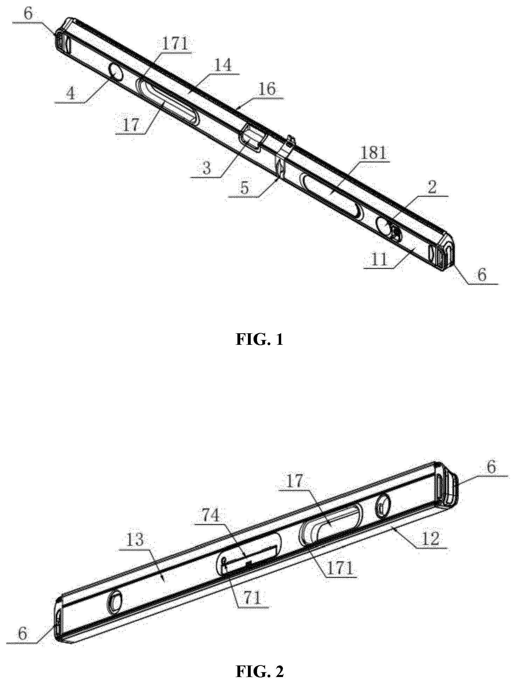

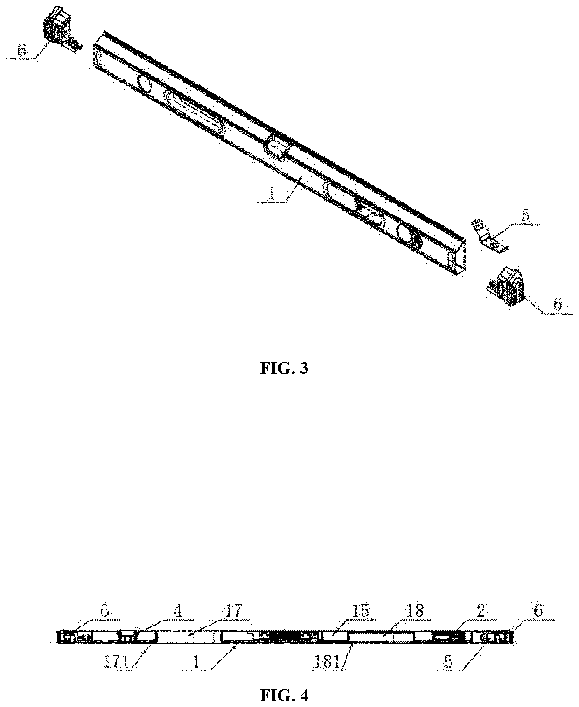

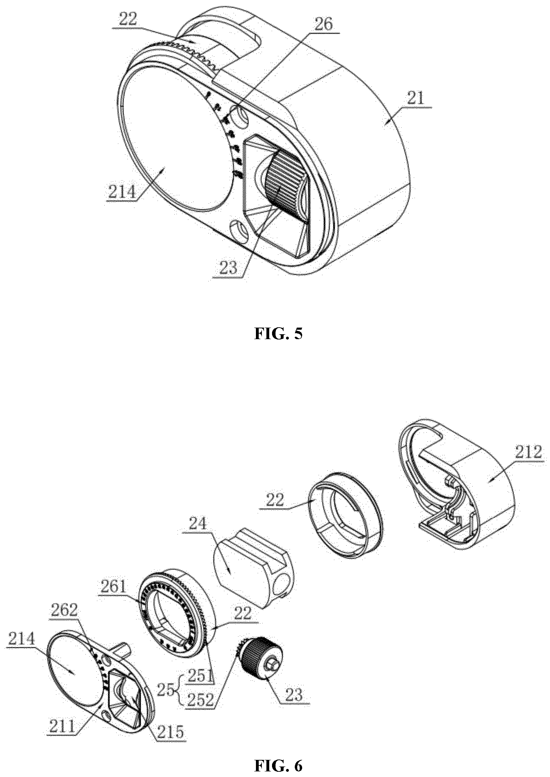

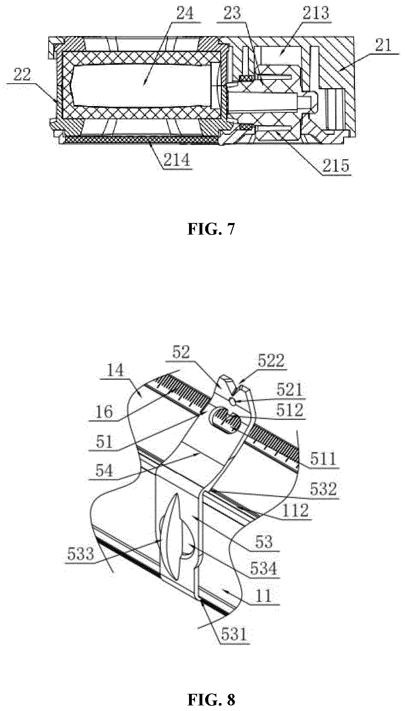

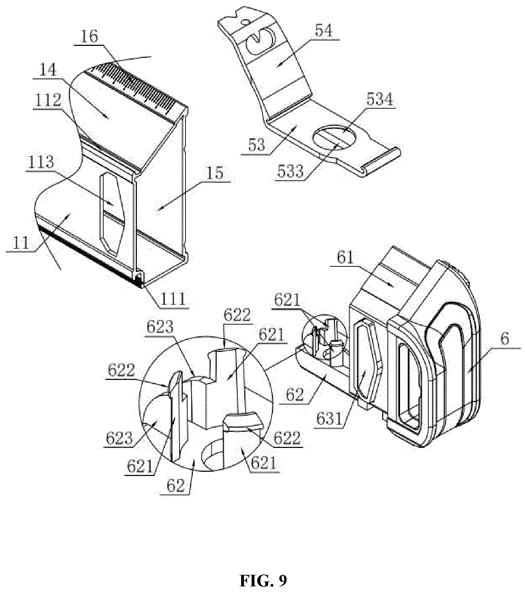

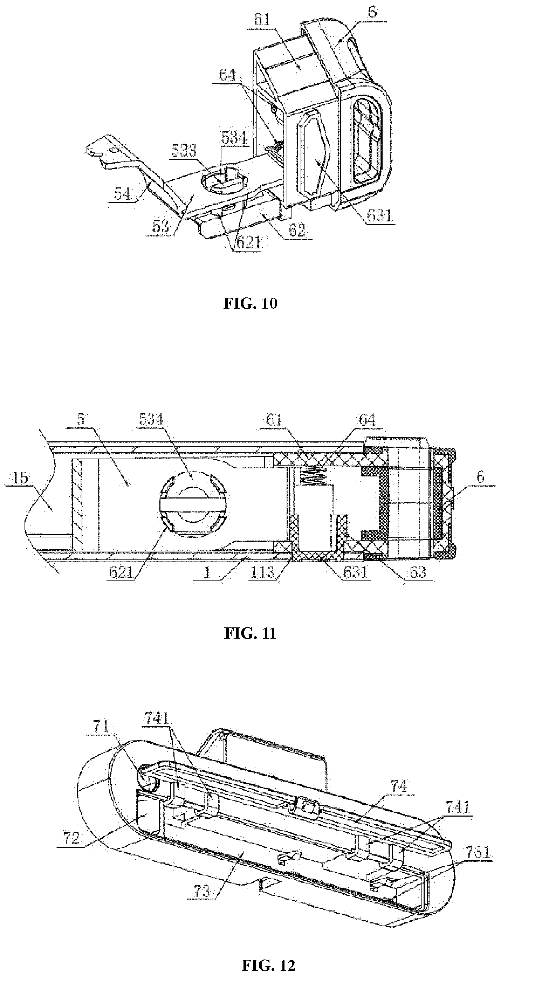

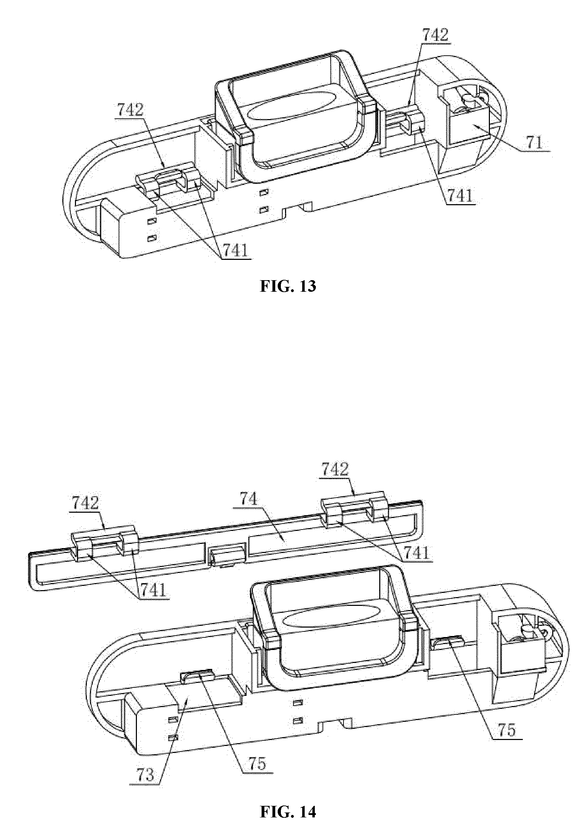

As shown in FIGs. 1-14, the present invention discloses a spirit level with an adjustable measuring angle, including: a body 1, in a long strip shape extending from left to right; and an adjustable levelling assembly 2 disposed at a right end of the body 1.

Specifically, the adjustable levelling assembly 2 includes: a mounting shell seat 21 fixedly disposed in the body 1 by means of being embedded; a rotating carrier 22 rotatably disposed in the mounting shell seat 21 by clamping two ends in an axial direction, and a rotating axial direction of the rotating carrier 22 being along a front-rear direction; an adjusting handwheel 23 rotatably disposed in the mounting shell seat 21 by clamping two ends in the axial direction, and a rotating axial direction of the adjusting handwheel 23 being along a left-right direction; an adjustable level bubble 24 embedded in the rotating carrier 22 to be fixedly mounted to the rotating carrier 22, so that the rotation of the rotating carrier 22 can drive the adjustable level bubble 24 to rotate; a linkage assembly 25 disposed between the rotating carrier 22 and the adjusting handwheel 23 to rotate the adjusting handwheel 23 to drive the rotating carrier 22 to rotate; and a reading structure 26 disposed on the mounting housing 21 and the rotating carrier 22 to measure an included angle between a length direction of the adjustable level bubble 24 and the length direction of the body 1.

Therefore, the user can rotate the adjusting handwheel 23 to realize the linkage rotation of the rotating carrier 22 under the action of the linkage assembly 25, thereby adjusting the angle of the adjustable level bubble 24, and after the adjustment is completed, the included angle between the length direction of the adjustable level bubble 24 and the length direction of the body 1 can be determined through the reading structure 26, so that the adjustable level bubble 24 can be adjusted to any angle for use, thereby greatly improving the adaptability. Common use methods include the following two methods. The first method is to adjust the adjustable level bubble 24 to a specific angle k1 in advance, and under the condition of ensuring that the adjustable level bubble 24 does not move, adjust the length direction of the body 1 to the desired measurement position, and determine whether an included angle between the measurement position and the horizontal plane is k1 by observing whether the bubbles in the level bubble are centered. The second method is to adjust the body 1 to the desired measurement position first, and then rotate the adjusting handwheel 23 so that the bubbles in the adjustable level bubble 24 are centered, and at this time, the indication k2 on the reading structure 26 is the included angle between the measurement position and the horizontal plane. In addition, the adjusting handwheel 23 is provided so that the adjustable level bubble 24 and the reading structure 26 would not be blocked by the user's hand when the user drives the adjusting handwheel 23 to rotate, that is, there is no need to raise the hand to observe the current reading and the state of the adjustable level bubble 24, thereby making the adjustment process more convenient.

Specifically, the reading structure 26 in this embodiment includes a main scale 261 and a vernier scale 262, where the main scale 261 is disposed on the rotating carrier 22, the main scale 261 is disposed in a circular shape, the included angle between adjacent scale lines of the main scale 261 is 1*n°, that is, the minimum indexing value of the main scale 261 is 1*n°, and where the vernier scale 262 is disposed on the mounting shell seat 21, the vernier scale 262 is disposed in an arc shape, the 0° reference line of the vernier scale 262 and the 0° reference line of the main scale 261 are aligned when the adjustable level bubble 24 is in the horizontal state, and the included angle between adjacent scale lines on the vernier scale 262 is a specific 1*n°, that is, when any reference line of the main scale 261 is aligned with the zero line of the vernier scale 262, the numeral value shown in the reference line of the main scale 261 is the included angle between the length direction of the adjustable level bubble 24 and the length direction of the body 1. During measurement, the numeral value shown in the reference line of the main scale 261 is the included angle between an object and the horizontal line. Similarly, when the 0° reference line of the main scale 261 is aligned with any scale line on the vernier scale 262, the numeral value shown in the reference line of the vernier scale 262 is the included angle between the length direction of the adjustable level bubble 24 and the length direction of the body 1. During measurement, the numeral value shown in the reference line of the vernier scale 262 is the included angle between the object and the horizontal line, for example, specific angle numeral values shown in the reference line of the vernier scale 262 are 22.5°, 45°, 75°, and the like.

In other embodiments, the main scale 261 may be disposed in an arc shape according to different needs.

In other embodiments, the vernier scale 262 may be disposed as unequally separated angles according to different needs, so as to adapt to needs in a specific environment.

In other embodiments, the vernier scale 262 may not be set.

Specifically, the linkage assembly 25 in this embodiment includes first bevel teeth 251 integrally formed at an outer periphery of the rotating carrier 22 and second bevel teeth 252 integrally formed on an axial end of the adjusting handwheel 23, and the first bevel teeth 251 and the second bevel teeth 252 are engaged with each other.

Therefore, the adjusting handwheel 23 having the axial direction in the left-right direction rotates to drive the rotating carrier 22 having the axial direction in the front-rear direction to rotate through the linkage between the first bevel teeth 251 and the second bevel teeth 252.

Preferably, the adjusting handwheel 23 is located on the right side of the rotating carrier 22, so that most users whose right hand is the dominant hand can support the body 1 by the left hand to keep the body 1 at a desired measurement position, and then rotate the adjusting handwheel 23 on the right side of the rotating carrier 22 by the right hand. At this time, the right hand is less likely to block the user's field of view, thereby facilitating observation.

Preferably, the modulus ratio of the first bevel teeth 251 and the second bevel teeth 252 in this embodiment is 3-7, so that the rotation amplitude of the rotating carrier 22 driven by one rotation of the adjusting handwheel 23 is smaller, to improve the accuracy of adjustment.

Specifically, the mounting shell seat 21 is formed by splicing a first half shell 211 on a front side and a second half shell 212 on a rear side, so that the mounting shell seat 21 is formed with an assembly cavity 213, the rotating carrier 22 and the adjusting handwheel 23 are disposed in the assembly cavity 213, a transparent viewable window 214 is disposed at a front end of the mounting shell seat 21 located at the rotating carrier 22, and the mounting shell seat 21 is provided with an outward-extending opening 215 for the adjusting handwheel 23 to partially penetrate forward.

Therefore, the transparent viewable window 214 is provided so that the user can observe an indication of the main scale 261 and the state of the adjustable level bubble 24 inwardly, and the outward-extending opening 215 is provided so that the adjustable handwheel 23 partially extends to facilitate the user to drive the adjustable handwheel 23 to rotate.

Specifically, the body 1 in this embodiment is provided with a mass reduction cavity 15, and the body 1 includes a first plate body 11 located on a front side of the mass reduction cavity 15, a second plate body 12 located on a lower side of the mass reduction cavity 15, a third plate body 13 located on a rear side of the mass reduction cavity 15, and a fourth plate body 14 located on an upper side of the mass reduction cavity 15. The first plate body 11 and the third plate body 13 are both perpendicular to a front-rear direction, and the width of the first plate body 11 is smaller than that of the third plate body 13; the second plate body 12 is perpendicular to a vertical direction, a front side of the second plate body 12 in the width direction is connected to a lower side of the first plate body 11 in the width direction, a rear side of the second plate body 12 in the width direction is connected to a lower side of the third plate body 13 in the width direction. The fourth plate body 14 is an inclined plate inclined from a front lower side to a rear upper side, the lower side of the fourth plate body 14 in the width direction is connected to the upper side of the first plate body 11 in the width direction, and the upper side of the fourth plate body 14 in the width direction is connected to the upper side of the third plate body 13 in the width direction, so that the whole body 1 is a shape of a right trapezoid. Further, a length scale 16 is disposed on a side of the fourth plate body 14 close to the third plate body 13.

Therefore, in use, by placing the third plate body 13 on a plane where the desired measurement position is located and then adjusting the length scale 16 to be parallel or coincided with the desired measurement position, where the fourth plate body 14 is inclined and the length scale 16 is disposed at the position of the fourth plate body 14 close to the third plate body 13, so that the length scale 16 is closer to the desired measurement position, the user can more accurately align the length scale 16 with the desired measurement position and make a more accurate reading according to visual judgment.

In addition, the body 1 in this embodiment is provided with a first level bubble 3 and a second level bubble 4, the length direction of the first level bubble 3 is parallel to the length direction of the body 1 in the left-right direction, and the length direction of the second level bubble 4 is perpendicular to the length direction of the body 1 in the vertical direction. Specifically, the first level bubble 3 is provided in the middle portion of the length of the body 1, the second level bubble 4 is provided at the left end of the body 1, and the adjustable levelling assembly 2 is provided at the right end of the body 1.

Further, a scriber 5 is slidably disposed on the body 1 in this embodiment along the left-right direction; the scriber 5 is provided with a reading portion 51 and a positioning portion 52, the reading portion 51 is fitted to the length scale 16 to measure a reading of a current position of the positioning portion 52, and the positioning portion 52 extends upward from an intersection between the third plate body 13 and the fourth plate body 14 to be away from the body 1 for scribing.

Therefore, the scriber 5 can be provided so that positioning is more accurate by fitting the reading portion 51 to the length scale 16, and after positioning, the scribing is carried out at a corresponding position by the positioning portion 52, so as to calibrate the desired position after the spirit level is removed.

Specifically, a reading hole 511 in a runway shape penetrates through the reading portion 51, and a reading pointer 512 in a triangle is protruded on a peripheral wall of the reading hole 511. Therefore, a region near the reading pointer 512 is delimited through the reading hole 511, so that the user can more quickly recognize an approximate reading of the reading pointer 512, and then determine an accurate reading by a specific indication of the reading pointer 512 in the reading hole 511.

The positioning portion 52 is provided with a positioning hole 521 and a V-shaped notch 522, the positioning hole 521 penetrates through the positioning portion 52, and the V-shaped notch 522 is disposed on a side of the positioning portion 52 facing away from the body 1. Therefore, the positioning hole 521 is provided so that a positioning point can be marked at the desired measurement position by passing a marker pen through the positioning hole 521, while the V-shaped notch 522 is provided so that a V-shaped line can be marked at the desired measurement position by moving the marker pen along an edge of the V-shaped notch 522.

The scriber 5 includes a sliding portion 53 disposed on the first plate body 11 and an extension portion 54 disposed on the fourth plate body 14, the sliding portion 53, the extension portion 54, the reading portion 51 and the positioning portion 52 are integrally formed and connected in sequence; in addition, the sliding portion 53 is provided with a hook-shaped first clamping portion 531 located on the lower side of the first plate body 11 in the width direction, and a hook-shaped second clamping portion 532 located on the upper side of the first plate body 11 in the width direction; a first clamping slot 111 with a downward opening is disposed at the lower side of the first plate body 11 in the width direction, and a second clamping slot 112 with an upward opening is disposed at the upper side of the first plate body 11 in the width direction; the first clamping portion 531 is clamped in the first clamping slot 111, and the second clamping portion 532 is clamped in the second clamping slot 112, so that with the fitting of the first clamping portion 531 and the first clamping slot 111 and the second clamping portion 532 and the second clamping slot 112, the scriber 5 slides on the body 1 along the left-right direction, where the scriber 5 is made of a deformable material, so that the second clamping portion 532 can be separated from the second clamping slot 112 by overturning the positioning portion 52 forward. In addition, after the second clamping portion 532 is separated from the second clamping slot 112, the scriber 5 can be disassembled by facing downward to remove the first clamping portion 531 from the first clamping slot 111.

Further, a handle portion 533 in an arc sheet shape is disposed on the front side of the sliding portion 53, and the handle portion 533 is perpendicular to the left-right direction, so that the user can slide and drive the handle portion 533 in the left-right direction by gripping the handle portion 533.

End covers 6 are detachably provided at both ends of the length of the body 1, so that both ends of the mass reduction cavity 15 are closed by the end covers 6.

Further, the end cover 6 is provided with an insertion portion 61, the outer periphery shape and size of the insertion portion 61 are adapted to those of the mass reduction cavity 15, so that positioning is conducted by inserting the insertion portion 61 into the mass reduction cavity 15 for insertion and fitting, and abutting the insertion portion 61 against the body 1 through the end covers 6 after the insertion portion 61 is completely inserted into the mass reduction cavity 15.

In addition, the insertion portion 61 is provided with a first mounting portion 62 extending in a direction away from the end cover 6 at one end facing away from the end cover 6, where the first mounting portion 62 is close to the second plate body 12 when the end cover 6 is assembled at the body 1, and four assembly members 621 are arranged along the circumferential direction on the upper side of the first mounting portion 62; the top of each assembly member 621 is provided with a snap protrusion 622 protruding outward, and correspondingly, the middle portion of the sliding portion 53 is provided with a hole-shaped second mounting portion 534.

When the sliding portion 53 is fitted on the body 1 through the first clamping portion 531 and the second clamping portion 532, a use state is formed.

When the sliding portion 53 is fitted to the first mounting portion 62 through the second mounting portion 534, and the end cover 6 is fitted to the body 1 so that the scriber 5 is built into the mass reduction cavity 15, a storage state is formed.

Specifically, in a state when the end cover 6 is detached from the body 1, the scriber 5 is adjusted to form that the sliding portion 53 is located at the bottom, and the extension portion 54 is located at a side of the sliding portion 53 away from the end cover 6 and extends obliquely upward, and then the sliding portion 53 is turned downward to enable the first mounting portion 62 to be inserted into the second mounting portion 534, where after the fitting is completed, an upward acting force is not applied to the scriber 5, and the separation of the first mounting portion 62 from the second mounting portion 534 can be effectively limited through the snap protrusion 622, so as to ensure the mounting stability. If the scriber 5 needs to be detached from the end cover 6, the upward acting force is actively applied, so that the first mounting portion 62 is enforced to be separated from the second mounting portion 534, so that the scriber 5 can be detachably mounted at the end cover 6.

In addition, when the scriber 5 is assembled to the end cover 6, the handle portion 533 is perpendicular to the front-rear direction, and thus can be inserted into a gap between the two assembly members 621 on the left side and a gap between the assembly members 621 on the right side, thereby serving as a circumferential limit to further improve the stability of the scriber 5 assembled to the end cover 6.

More preferably, the two assembly members 621 on the left side are provided with a stiffener plate 623 extending to the left, and the two assembly members 621 on the right side are provided with a stiffener plate 623 extending to the right side, so that the stiffener plate 623 has a circumferential rotation restriction effect on the handle portion 533, and under the action of the stiffener plate 623, the force acting on the assembly members 621 due to the rotation of the handle portion 533 is reduced, so that the assembly members 621 are protected.

Further, the insertion portion 61 is slidably provided with an unlocking member 63 in a front-rear direction, a front end of the unlocking member 63 is provided with a pressing portion 631, the pressing portion 631 extends forward to be out of the insertion portion 61 or retracts backward to be into the insertion portion 61 with the sliding of the unlocking member 63; in addition, a reset member 64 is disposed between the insertion portion 61 and the unlocking member 63, the reset member 64 is used for driving the pressing portion 631 to extend forward to be out of the insertion portion 61, and accordingly, a locking slot 113 penetrates through the first plate body 11 in the front-rear direction, and the pressing portion 631 is clamped into the locking slot 113 to limit the separation of the insertion portion 61 from the mass reduction cavity 15.

Therefore, when the end cover 6 needs to be assembled to the body 1, first the pressing portion 631 is pressed into the insertion portion 61 and maintained to be pressed, and then the insertion portion 61 is inserted into the mass reduction cavity 15; after the insertion portion 61 is inserted in place, the pressing portion 631 is aligned with the locking slot 113, so that the pressing portion 631 is reset forward with the unlocking member 63 under the action of the reset member 64, so as to implementing the clamping and fitting of the pressing portion 631 and the locking slot 113. Furthermore, when the end cover 6 needs to be detached, first the pressing portion 631 is pressed into the insertion portion 61 and maintained to be pressed, so that the pressing portion 631 is separated from the locking slot 113, and then the insertion portion 61 is pulled out of the mass reduction cavity 15; and then the pressing portion 631 is reset forward with the unlocking member 63 under the action of the reset member 64.

Specifically, a compression spring is used as the reset member 64.

In addition, in this embodiment, a lifting and holding through hole 17 penetrates through the middle portion of the left half section of the body 1 along the front-rear direction, and the length direction of the lifting and holding through hole 17 is the same as the length direction of the body 1. In addition, in order to increase the comfort of hand gripping, a grasping handle 171 made of a plastic material is installed on the lifting and holding through hole 17, so that it can be convenient for the user to carry the lifting and holding through hole 17 and use the spirit level.

Further, in this embodiment, a first storage groove 18 penetrating to a front side surface of the body 1 is disposed in the middle portion of the right half section of the body 1, a first opening and closing cover 181 for opening and closing the first storage groove 18 is slidably disposed on the front side surface of the body 1, and the length direction of the first storage groove 18 and the sliding direction of the first opening and closing cover 181 are both provided along the length direction of the body 1.

Therefore, 1. by providing the first storage groove 18, a tool commonly used with a spirit level, such as a screw lot, a drill bit, and an Allen wrench, can be stored in the first storage groove 18, and when it is not in use, stable storage is ensured by closing the first opening and closing cover 181; 2. the lifting and holding through hole 17 is provided in the middle portion of the left half section of the body 1, and the first storage groove 18 is disposed in the middle portion of the right half section of the body 1, so that the overall structure is more orderly and compact.

The first opening and closing cover 181 slides to the left to open the first storage groove 18, and slides to the right to close the first storage groove 18, and then the first opening and closing cover 181 is fixed by means of a buckle after sliding rightward in place.

In addition, a middle portion of the body 1 in this embodiment is provided with a pencil sharpener 71, a collection cavity 72 and a second storage groove 73, an opening of the pencil sharpener 71 is located on the rear side surface of the body 1, the collection cavity 72 and the second storage groove 73 both penetrate backward to the rear side surface of the body 1, a second opening and closing cover 74 for opening and closing the collection cavity 72 and the second storage groove 73 are disposed on the body 1 in an overturned manner, the pencil sharpener 71 is used for sharpening a pencil, the collection cavity 72 is used for collecting debris from the sharpening of the pencil sharpener 71, and the second storage groove 73 is used for placing the pencil.

Therefore, the pencil used with the spirit level can be cut by the pencil sharpener 71, and the cut debris can be collected in the collection cavity 72, where when the debris is collected, the collection cavity 72 is closed by turning the second opening and closing cover 74, so as to preventing the debris from dropping out, and when the debris needs to be cleaned, the debris can be poured out by turning the second opening and closing cover 74 to open the collection cavity 72. In addition, the second storage groove 73 is further provided so that the used pencil can be placed in the second storage groove 73 for storage, and the second opening and closing cover 74 can close the second storage groove 73 to ensure stable storage of the pencil.

Preferably, the elastic clip 731 is provided in the second storage groove 73, so that the pencil is clamped by the elastic clip 731, so that the storage stability of the pencil is further improved.

The upper end of the second opening and closing cover 74 is provided with a U-shaped reverse portion 741, one end of the U-shaped reverse portion 741 is integrally formed to connect the upper end of the second opening and closing cover 74, and the other end of the U-shaped reverse portion 741 is integrally formed with a hinge rod 742; correspondingly, the body 1 is provided with a hinge clamping slot 75 located above the second collection groove, so that the hinge rod 742 extends into the second collection groove and penetrates upward out of the second collection groove, and the hinging is achieved through the fitting between the hinge rod 742 and the hinge clamping slot 75.

## Claims

1. A spirit level with an adjustable measuring angle, comprising:
a body (1); and
an adjustable levelling assembly (2) disposed on the body (1), the adjustable levelling assembly (2) comprising:
a mounting shell seat (21) fixedly disposed in the body (1);
a rotating carrier (22) rotatably disposed in the mounting shell seat (21), and a rotating axial direction of the rotating carrier (22) and a length direction of the body (1) being perpendicularly disposed;
an adjusting handwheel (23) rotatably disposed in the mounting shell seat (21), and a rotating axial direction of the adjusting handwheel (23) and the rotating axial direction of the rotating carrier (22) being perpendicular disposed;
an adjustable level bubble (24) disposed on the rotating carrier (22) to rotate along with the rotating carrier (22);
a linkage assembly (25) disposed between the rotating carrier (22) and the adjusting handwheel (23) to rotate the adjusting handwheel (23) to drive the rotating carrier (22) to rotate; and
a reading structure (26) comprising a main scale (261) and a vernier scale (262), the main scale (261) and the vernier scale (262) being respectively disposed on the mounting shell seat (21) and the rotating carrier (22) to measure an included angle between a length direction of the adjustable level bubble (24) and the length direction of the body (1).

2. The spirit level with an adjustable measuring angle according to claim 1, wherein the main scale (261) is disposed on the rotating carrier (22), and the main scale (261) is disposed in a circular or arc shape, an included angle between adjacent scale lines of the main scale (261) is 1 * n°, the vernier scale (262) is disposed on the mounting shell seat (21), and the vernier scale (262) is disposed in an arc shape.

3. The spirit level with an adjustable measuring angle according to claim 1, wherein the linkage assembly (25) comprises first bevel teeth (251) disposed on the rotating carrier (22) and second bevel teeth (252) disposed on the adjusting handwheel (23), and the first bevel teeth (251) and the second bevel teeth (252) are engaged with each other.

4. The spirit level with an adjustable measuring angle according to claim 1, wherein the rotating carrier (22) and the adjusting handwheel (23) are arranged along the length direction of the body (1), and the rotating axial direction of the adjusting handwheel (23) is disposed along the length direction of the body (1); and
an assembly cavity (213) is disposed in the mounting shell seat (21), the rotating carrier (22) and the adjusting handwheel (23) are disposed in the assembly cavity (213), a transparent viewable window (214) is disposed at an end of the mounting shell seat (21) located at the rotating axial direction of the rotating carrier (22), the mounting shell seat (21) is provided with an outward-extending opening (215) for the adjusting handwheel (23) to partially pass out, and the transparent viewable window (214) and the outward-extending opening (215) are located at a same side of the mounting shell seat (21).

5. The spirit level with an adjustable measuring angle according to claim 1, wherein the body (1) is provided with a mass reduction cavity (15), the body (1) comprises a first plate body (11), a second plate body (12), a third plate body (13), and a fourth plate body (14) surrounding an outer periphery of the mass reduction cavity (15), the first plate body (11) and the third plate body (13) are disposed in parallel, the width of the first plate body (11) is less than the width of the third plate body (13), two sides of the second plate body (12) in the width direction are respectively connected to a side of the first plate body (11) in the width direction and a side of the third plate body (13) in the width direction, the second plate body (12) is perpendicular to the first plate body (11) and the third plate body (13), respectively, and two sides of the fourth body (14) in the width direction are respectively connected to the other side of the first plate body (11) in the width direction and the other side of the third plate body (13) in the width direction, so that the fourth plate body (14) is disposed in an inclined manner with respect to the first plate body (11) and the third plate body (13); and
a side of the fourth plate body (14) close to the third plate body (13) is provided with a length scale (16).

6. The spirit level with an adjustable measuring angle according to claim 5, wherein a scriber (5) is slidably disposed on the body (1), the scriber (5) is provided with a reading portion (51) and a positioning portion (52), the reading portion (51) is fitted to the length scale (16) to measure a reading of a current position of the positioning portion (52), and the positioning portion (52) extends away from the body (1) in a width direction of the third plate body (13) from an intersection between the third plate body (13) and the fourth plate body (14) for scribing.

7. The spirit level with an adjustable measuring angle according to claim 6, wherein a reading hole (511) penetrates through the reading portion (51), and a reading pointer (512) is disposed in the reading hole (511).

8. The spirit level with an adjustable measuring angle according to claim 6, wherein the positioning portion (52) is provided with a positioning hole (521) and a V-shaped notch (522), the positioning hole (521) penetrates through the positioning portion (52), and the V-shaped notch (522) is disposed on a side of the positioning portion (52) facing away from the body (1).

9. The spirit level with an adjustable measuring angle according to claim 6, wherein the scriber (5) comprises a sliding portion (53) disposed on the first plate body (11), the sliding portion (53) is provided with a first clamping portion (531) and a second clamping portion (532) on two sides of the first plate body (11) in the width direction, a first clamping slot (111) and a second clamping slot (112) are disposed on two sides of the first plate body (11) in the width direction, an opening of the first clamping slot (111) is disposed away from the second clamping slot (112), an opening of the second clamping slot (112) is disposed away from the first clamping slot (111), the first clamping portion (531) is slidably disposed in the first clamping slot (111), the second clamping portion (532) is slidably disposed in the second clamping slot (112), and the positioning portion (52) is overturned, so that the second clamping portion (532) is separated from the second clamping slot (112).

10. The spirit level with an adjustable measuring angle according to claim 6, wherein the scriber (5) is detachably disposed on the body (1);
two ends of the length of the body (1) are respectively detachably provided with end covers (6), and the end covers (6) are provided with a first mounting portion (62) positioned within the mass reduction cavity (15);
the scriber (5) is provided with a second mounting portion (534), and the first mounting portion (62) is fitted to the second mounting portion (534) to realize the detachable mounting of the scriber (5) on the end cover (6);
the scriber (5) is fitted on the body (1) to form a use state; and
the scriber (5) is fitted to the end cover (6), and the end cover (6) is fitted to the body (1), so that the scriber (5) is built into the mass reduction cavity (15) to form a storage state.

11. The spirit level with an adjustable measuring angle according to claim 10, wherein the end cover (6) is provided with an insertion portion (61), and outer peripheral shape and size of the insertion portion (61) are adapted to peripheral wall shape and size of the mass reduction cavity (15); and
the insertion portion (61) is slidably provided with an unlocking member (63), the unlocking member (63) is provided with a pressing portion (631), the pressing portion (631) extends out of the insertion portion (61) or retracts into the insertion portion (61) with the sliding of the unlocking member (63), a reset member (64) that drives the pressing portion (631) to extend out of the insertion portion (61) is disposed between the insertion portion (61) and the unlocking member (63), a locking slot (113) penetrates through the first plate body (11), and the pressing portion (631) is clamped into the locking slot (113) to limit the separation of the insertion portion (61) from the mass reduction cavity (15).

12. The spirit level with an adjustable measuring angle according to claim 1, wherein the spirit level further comprises a first level bubble (3) and a second level bubble (4), a length direction of the first level bubble (3) is parallel to the length direction of the body (1), a length direction of the second level bubble (4) is perpendicular to the length direction of the body (1), the first level bubble (3) is disposed at the middle portion of the length of the body (1), the second level bubble (4) is disposed at one end of the length of the body (1), and the adjustable levelling assembly (2) is disposed at the other end of the length of the body (1).

13. The spirit level with an adjustable measuring angle according to claim 1, wherein a lifting and holding through hole (17) penetrates through the body (1), a length direction of the lifting and holding through hole (17) is the same as the length direction of the body (1), and a grasping handle (171) is disposed in the lifting and holding through hole (17).

14. The spirit level with adjustable measuring angle according to claim 1, wherein a first storage groove (18) penetrating to a surface of the body (1) is disposed in the body (1), a first opening and closing cover (181) for opening and closing the first storage groove (18) is slidably disposed on the surface of the body (1), and a length direction of the first storage groove (18) and a sliding direction of the first opening and closing cover (181) are both disposed along the length direction of the body (1).

15. The spirit level with an adjustable measuring angle according to claim 1, wherein the body (1) is provided with a pencil sharpener (71), a collection cavity (72) and a second storage groove (73), an opening of the pencil sharpener (71) is located on the surface of the body (1), the collection cavity (72) and the second storage groove (73) both penetrate to the surface of the body (1), a second opening and closing cover (74) for opening and closing the collection cavity (72) and the second storage groove (73) are disposed on the body (1) in an overturned manner, the pencil sharpener (71) is used for sharpening a pencil, the collection cavity (72) is used for collecting debris from the sharpening of the pencil sharpener (71), and the second storage groove (73) is used for placing the pencil.
